## Europäisches Patentamt
## European Patent Office
## Office européen des brevets

(11) Veröffentlichungsnummer: **0 131 815**
**B1**

(12) ## EUROPÄISCHE PATENTSCHRIFT

(45) Veröffentlichungstag der Patentschrift:
03.09.86

(51) Int. Cl.⁴: **H 02 M 1/12**, H 02 P 7/62

(21) Anmeldenummer: **84107494.1**

(22) Anmeldetag: **28.06.84**

(54) **Wechselstrommaschinenantrieb.**

(30) Priorität: **13.07.83 CH 3831/83**

(43) Veröffentlichungstag der Anmeldung:
**23.01.85 Patentblatt 85/4**

(45) Bekanntmachung des Hinweises auf die Patenterteilung:
**03.09.86 Patentblatt 86/36**

(84) Benannte Vertragsstaaten:
**AT CH DE FR GB LI**

(56) Entgegenhaltungen:
**DE-A-2 852 066**
**DE-A-2 905 408**
**US-A-3 501 686**

**(BROWN BOVERI REVIEW, Band 10, 1980, Seiten 577-583, Baden, CH; V. SUCHANEK et al.: "Static frequency converters for variable-speed drives"**

(73) Patentinhaber: **BBC Aktiengesellschaft Brown, Boveri & Cie., Haselstrasse, CH- 5401 Baden (CH)**

(72) Erfinder: **Peneder, Franz, Clarastr. 10, CH- 5442 Fislisbach (CH)**
Erfinder: **Suchanek, Vojen, Kirchweg 45, CH- 5415 Nussbaumen (CH)**

EP 0 131 815 B1

LIBER, STOCKHOLM 1986

**Beschreibung**

Bei der Erfindung wird ausgegangen von einem Wechselstrommaschinenantrieb nach dem Oberbegriff des Patentanspruchs 1.

Mit diesem Oberbegriff nimmt die Erfindung auf einen Stand der Technik von Wechselstrommaschinenantrieben Bezug, wie er in der Schweizer Firmenzeitschrift Brown Boveri Mitt. 10 (1980) S. 577-5B3 beschrieben ist. Dort werden Antriebe von Synchronmotoren angegeben, die von 6- und 12pulsigen Frequenzumrichtern gespeist sind. Zur Verringerung der Leistungsverluste am Motor werden unter Verwendung 12pulsiger Frequenzumrichter die 5. und 7. Oberschwingung auf der Netz- und Motorseite vermieden. Zum Anfahren von Synchronmotoren mit sehr hohem Last- bzw. Gegenmoment der Belastungamaschine ist es bakannt, eine 24pulsige Wechselrichterschaltung zu verwenden. Stromoberschwingungen und damit auch die Erwärmung des Rotors können durch dieae Masanahme weiter verringert werden. 24pulsige Wechselrichterschaltungen sind jedoch schaltungsaufwendig und teuer.

Umrichter ermöglichen die Erzeugung eines Wechselstroms vorgebbarer Phasenzahl mit variabler Frequenz und somit einen drehzahlgeregelten Antrieb ohne Zwiachenschaltung eines Uebersetzungsgetriebes. Der erzeugte Wechselstrom ist jedoch nicht sinusförmig, wie er von den Wechselstrommotoren benötigt wird, so dass es zu einem unruhigen Lauf, zu unerwünschten Pendelmomenten, zu erhöhten Rotortemperaturen und schliesslich zu einem relativ niedrigen Wirkungsgrad des Motors führt, wenn keine oder ungenügende Vorkehrungen getroffen werden, um den Wechselstrom sinusförmig zu machen.

Derartige frequenzvariable Antriebe werden z.B. für Kesselspeisepumpen, Zementrohrmühlen, Turbokompresaoren, Bergwerk-Förderantriebe, Baggerantriebe, Gasturbinen, Stromrichter-Synchrongeneratoraysteme für Wind- und Wasserkraftwerke und für Ventilatoren verwendet.

Die Erfindung, wie sie in den Patentansprüchen gekennzeichnet ist, löst die Aufgabe, Pendelmomente bei Wechselstrommaschinen zu verringern und den Wirkungsgrad von Wechselstrommaschinen, die von Umrichtern variabler Frequenz gespeist sind, zu verbessern.

Die Wirkung der damit beanspruchten Massnahme besteht darin, dass die Wechselstrommaschinen weniger vibrieren und damit ruhiger laufen. Infolge der verbesserten Filterung harmonischer Oberschwingungen über einen grossen Frequenzbereich können die Aufwendungen für die Kühlung des Rotors verringert werden. Der Wirkungsgrad der Machinen kann um mehrere Prozent verbessert und somit Energie in beachtlichem Umfang gespart werden, da die Antriebe hauptsächlich für Leistungen über 100 kW in Betracht kommen, bei Synchronmaschinen für Leistungen über 2 MW.

Eine 6pulsige Wechselrichterschaltung mit einem frequenzvariablen Filter erwies sich einer 12pulsigen Wechselrichterschaltung ohne frequenzvariables Filter im Wirkungsgrad, cos φ, Preis, Gewicht, Abmessungen der Wechselstrommaschine und Pulsationsmomenten überlegen.

Gemäss einer vorteilhaften Ausgestaltung der Erfindung wird die Wirkung mit relativ wenig Schaltelementen durch Saugkreise mit passend dimensioniertem, frequenzabhängigem ohmschem Widerstand erreicht. Durch Zu- und Abschalten von Drosseln oder Drosselabschnitten lässt sich der Frequenzbereich, für den die harmonischen Oberschwingungen ausgefiltert werden, stufenweise erweitern bzw. verschieben, in Abhängigkeit von der Frequenz des Wechselrichters. Eine kontinuierliche Verschiebung des Filterfrequenzbereiches ist mit zwei Drosseln mit ferromagnetischem Kern möglich, wenn die Drosseln in der Nähe des Sättigungsbereiches der Kerne betrieben und Ummagnetisierungen der Kerne vermieden werden.

Zum einschlägigen Stand der Technik wird zusätzlich auf die deutsche Zeitschrift Elektrie 30 (1976) S. 159-161 verwiesen, aus der Massnahmen zur Begrenzung von Störungen, die durch Spannungs- und Stromoberschwingungen hervorgerufen werden, bekannt sind. Dort werden Hinweise zur Bestimmung der Induktivität von Drosseln für Saugkreise gegeben, jedoch für konstante Frequenz.

Die Erfindung wird nachstehend anhand von Ausführungsbeispielen erläutert.

Es zeigen:

Fig. 1 ein Blockschaltbild eines Wechselstrommaschinenantriebs mit einem frequenzvariablen Filter,

Fig. 2 ein für die 5. und 7. harmonische Oberschwingung ausgelegtes Filter gemäss Fig. 1 mit 6 Saugkreisen für 3phasigen Wechselstrom,

Fig. 3 einen Saugkreis gemäss Fig. 2 für eine n. harmonische Oberschwingung mit stufenweise zu- und abschaltbaren Filterdrosaeln und Filterdrosaelabachnitten und

Fig. 4 einen Saugkreis gemäss Fig. 2 für eine n. harmonische Oberschwingung mit zwei Zusatz-Filterdrosseln mit ferromagnetischem Kern zur kontinuierlichen Aenderung der Resonanzfrequenz des Saugkreises.

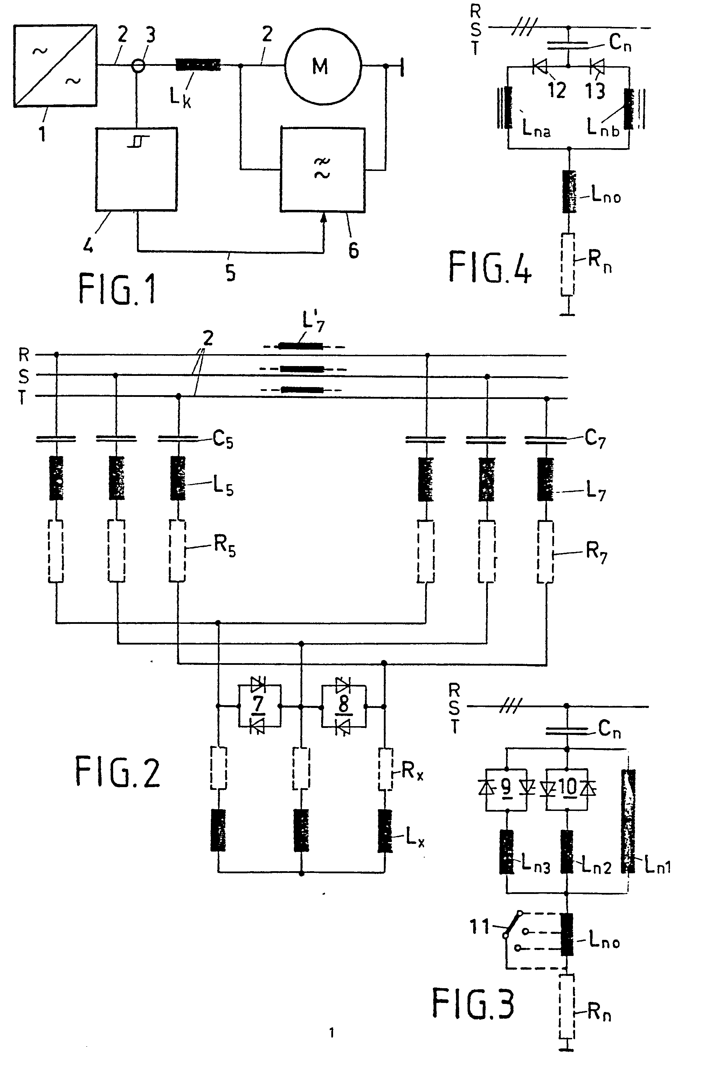

In Fig. 1 ist mit 1 ein Frequenzumrichter bezeichnet, der zum Umformen eines Wechselstromes bestimmter Frequenz und Phasenzahl in einen Wechselstrom mit einer gleichen oder anderen Phasenzahl und einer anderen, variablen Frequenz dient. Vorzugsweise wird ein Frequenzumrichter mit Gleichstromzwischenkreis verwendet, der über einen Gleichrichter Energie aus einem Wechsel- oder Drehstromnetz entnimmt und über einen netz- oder selbstgelöschten Wechselrichter eine Wechselstromlast mit 6pulsigem Wechselstrom speist. Dabei wird der Strom im Zwischenkreis mit Hilfe einer Drossel konstant gehalten.

Der Frequenzumrichter 1 speist über Wechselstromleitungen 2, deren Zahl gleich der Phasenzahl des Wechselstromes ist, eine Wechselstrommaschine M. Für Leistungen bis 2 MW sind Asynchronmaschinen günstig zu verwenden und für Leistungen über 2 MW Synchronmaschinen. Zwischen Frequenzumrichter 1 und Wechselstrommaschine M ist in jeder Wechselstromleitung 2 eine Kommutierungsdrossel $L_k$ zur Begrenzung der zeitlichen Aenderung des Wechselatromes di/dt geschaltet. Im Bypass bzw. parallel zur Wechaelstrommaschine M ist ein frequenzvariables Filter 6 vorgesehen, das unerwünschte Oberschwingungen in dem vom Frequenzumrichter 1 gelieferten Wechselstrom herausfiltert bzw. kurzschliesst, so dass die Wechselstrommaschine über einen vorgebbaren Frequenz- bzw. Drehzahlbereich einen nahezu sinusförmigen Wechselstrom erhält. Dadurch kann der Wirkungsgrad der Wechselstrommaschine verbessert werden.

Die Frequenz der vom Frequenzumrichter 1 erzeugten Wechselspannung wird während des Betriebes entsprechend der von der Wechselstrommaschine, insbesondere von einem Synchronmotor geforderten Drehzahl geändert. Entsprechend dieser Frequenzänderung ändern sich auch die Frequenzen der auszufilternden Oberschwingungen. Das frequenzvariable Filter 6 filtert nicht nur die Oberschwingungen für die Nennfrequenz des Synchronmotors heraus, sondern für einen vorgebbaren Frequenzbereich, in dem der Synchronmotor überwiegend betrieben wird.

An der Wechselstromleitung 2 wird mittels eines Frequenzmessers 3 die Frequenz des Wechselstroms gemessen und in einem mit dem Frequenzmesser verbundenen Frequenz-Grenzwertdetektor 4 mit mindestens einer vorgebbaren Grenzfrequenz verglichen. Ueberschreitet die gemessene Frequenz einen vorgebbaren Grenzwert, so wird über eine Schaltsignalleitung 5 ein Schaltsignal an das frequenzvariable Filter 6 übertragen und betätigt dort einen Wechselstromschalter.

Fig. 2 zeigt ein frequenzvariables Filter 6 gemäss Fig. 1. An jede Phasenleitung R, S, T der Wechselstromleitungen 2 ist ein Filter für die 5. und 7. harmonische Oberschwingung angeschlossen.

Mit $C_5$ und $G_7$ sind Filterkondensatoren, mit $L_5$, $L_7$, $L_7$ Filterdrosseln, mit $R_5$ und $R_7$ frequenzabhängige Widerstände der zugehörigen Filterdrosseln und mit 7 und 8 Wechselstromschalter mit antiparallel geschalteten Thyristoren bezeichnet. Die Indices 5 und 7 bezeichnen die Oberschwingung des Filters. Die eingangsseitig sn den gleichen Phasenleiter angeschlossenen Filter sind ausgangsseitig miteinander verbunden. Anstelle

der Filterdrosseln $L_7$ oder zusätzlich zu diesen können auch gestrichelt angedeutete Filter-Leitungsdrosseln $L_7$ verwendet werden, die dann an der gezeichneten Stelle in die Phasenleitungen R, S, T eingeschaltet werden und gleichzeitig als Kommutierungsdrosseln wirken.

Mit $L_x$ sind Zuschaltdrosseln und mit $R_x$ deren ohmsche frequenzsbhängige Widerstände bezeichnet.

Die Wechselstromschalter 7 und 8 sind in Abhängigkeit von einem Schaltsignal von dem Frequenz-Grenzwertdetektor 4 schaltbar. Sind die beiden Wechselstromschalter offen, so ist für jede Phase an die Ausgänge der Filter dieser Phase eine Zuschaltdrossel $L_x$ in Reihe geschaltet. Sind die Wechselstromschalter 7 und 8 geschlossen, so sind die Zuschaltdrosseln kurzgeschlossen und auch die Ausgänge der Phasenfilter aller Phasen gegenseitig. Ein Ausgang jeder Zuschaltdrosseln $L_x$ ist ausserdem mit einem Ausgang jeder anderen Zuschaltdrossel $L_x$ verbunden.

Für einen p-pulsigen Frequenzumrichter 1 ergibt sich die Ordnungszahl n der herauszufilternden Oberschwingungen aus:

$$k = np \pm l, n = 1, 2, 3,.... \quad (1)$$

Für die Strom-Amplitude $I_n$ der n. Oberschwingung gilt:

$$I_n = I_l / n, \quad (2)$$

wobei $I_l$ die Stromamplitude der Grundschwingung ist. Bei einem 6pulsigen Frequenzumrichter mit den 5., 7., 11., 13., 17.,.... Oberschwingungen kommt es also im wesentlichen auf das Ausfiltern der 5. und 7. Oberschwingung an. Als Filter werden Reihenschwingkreise bzw. Saugkreise aus einer Reihenschaltung eines Kondensators (Kapazität C) mit einer Drossel (Induktivität L) verwendet, die für die jeweilige Stromoberschwingungen einen Kurzschluss darstellen (Resonanz). Für einen Saugkreis für die Oberschwingung n. Ordnung gilt:

$$L C = \frac{1}{(n \omega)^2}, \quad (3)$$

wobei ω die Kreisfrequenz der Grundschwingung ist. Der Kondensator muss den Strom

$$I_{cn} \approx \omega C U_E + I_n \quad (4)$$

führen können, $U_E$ = Effektivwert der Netzspsnnungsgrundschwingung, $I_n$ = Effektivwert der n. Stromharmonischen, und für eine Leistung

$$P_C \approx \omega C U_E^2 + I_n^2 / n \omega C \quad (5)$$

ausgelegt sein. Die Kondensstorleistung hat ein Minimum für

$$C = \frac{1}{\sqrt{n}} \; \frac{I_n}{\omega \, U_E} \; . \qquad (6)$$

Mit einem grösstmöglichen C-Wert kann aus Gleichung (3) die Induktivität für die jeweilige Oberschwingung berechnet werden.

Der Betrag des Wechselstromwiderstandes, d.h. die Impedanz der Wechselstrommaschine $Z_M$ ist bei der Berechnung von $I_n$ zu berücksichtigen gemäss:

$$I_n / I_0 = Z_S / Z_M, \quad (7)$$

wobei $I_0$ der mittlere ideelle Gleichstromanteil des Wechselstromes ist und $Z_S$ die Summenimpedanz, für die gilt:

$$1 / Z_S = 1 / Z_M + \sum_n 1 / Z_n, (8)$$

mit
$Z_n = j \omega L_n + 1 / j \omega C_n + R_n \; (9)$
und
$R_n = R_{n0} + \omega R_{n1} + \omega^2 R_{n2}. \; (10)$
$R_{n0}$, $R_{n1}$ und $R_{n2}$ sind Konstanten. $R_{n2}$ kann in erster Näherung bei der Berechnung vernachlässigt werden.

Für einen 10-MW-Synchronmotor M, der für eine Nennfrequenz $f_N$ von 100 Hz ausgelegt ist und eine Induktivität $L_M = 529 \, \mu H$ aufweist, für den angenähert gemäß Gleichung (10) $R_M = R_{M0} + \omega R_{M1}$ mit $R_{M0} = 0$ und $R_{M1} = 42 \, \mu\Omega$ gilt, erhält man bei Verwendung von Kondensatoren mit unterschiedlichen Kapazitätswerten für einen 6pulsigen Frequenzumrichter z.B. folgende Filterdaten für die 5. und 7. Oberschwingung, wobei die Werte so ausgewählt werden, dass sich ein möglichst breiter Frequenzbereich ergibt:

Beispiel 1: $C_5 = 110 \, \mu F$, $L_5 = 920 \, \mu H$, $R_{50} = 7,9 \, m\Omega$, $R_{51} = 13 \, \mu\Omega$

$C_7 = 160 \, \mu F$, $L_7 = 320 \, \mu H$, $R_{70} = 8,5 \, m\Omega$, $R_{71} = 11 \, \mu\Omega$

Beispiel 2: $C_5 = 90 \, \mu F$, $L_5 = 1,1 \, mH$, $R_{50} = 5,2 \, m\Omega$, $R_{51} = 8,6 \, \mu\Omega$

$C_7 = 135 \, \mu F$, $L_7 = 380 \, \mu H$, $R_{70} = 4 \, m\Omega$, $R_{71} = 5,5 \, \mu\Omega$

Mit einer derartigen Filterauslegung wird die beste Dämpfung für die 5. und 7. harmonische Oberschwingung für die 100-Hz-Grundschwingung und eine wirksame Dämpfung im Frequenzbereich von etwa 90 Hz bis 108 Hz erreicht. Unterschreitet die Frequenz des Wechselstroms z.B. den Frequenz-Grenzwert 90 Hz, so werden die Wechselstromschalter 7 und 8 ausgeschaltet und damit die Zuschaltdrosseln L den Saugkreisen jeder Wechselstromphase zugeschaltet. Die Zuschaltdrosseln $L_x$ sind mit

ihrer Induktivität so bemessen, dass sie für etwa 86 Hz eine optimale Dämpfung sowohl der 5. als auch der 7. harmonischen Oberschwingung bewirken. Damit kann von etwa 80 Hz bis 108 Hz eine wirksame Dämpfung der unerwünschten harmonischen Oberschwingungen und somit ein guter Wirkungsgrad und eine Verringerung der Pendelmomente der Wechselstrommaschine erreicht werden.

Fig. 3 zeigt einen eingangsseitig an eine der Drehstrom-Phasenleitungen R, S, T angeschlossenen Saugkreis für eine n. harmonische Oberschwingung, bei der anstelle einer einzigen Filterdrossel $L_n$ eine Hauptfilterdrossel $L_{n0}$ mit mehreren Abgriffen in Reihe mit drei Zusatz-Filterdrosseln $L_{n1}$, $L_{n2}$, $L_{n3}$ für die n. Oberschwingung vorgesehen sind, wobei die drei Zusatz-Filterdrosseln untereinander parallel geschaltet sind. Die Zusatz-Filterdrosseln $L_{n2}$ und $L_{n3}$ sind jeweils über in Reihe geschaltete Wechselstromschalter 10 bzw. 9 mit parallel geschalteten Thyristoren parallel geschaltet. $R_n$ bezeichnet den frequenzabhängigen ohmschen Widerstand der Filterdrosseln und $C_n$ einen Filterkondensator für die n. Oberschwingung. Ausgangsseitig ist der Saugkreis geerdet. Die gestrichelt gezeichneten Abgriffe der Haupt-Filterdrossel $L_{n0}$ sind über einen elektronischen Stufenschalter 11 mit dem geerdeten Ausgang der Haupt-Filterdrossel verbunden. Die Strichelung soll andeuten, dass dieser Stufenschalter alternativ zu den Zuschaltmöglichkeiten der Zusatz-Filterdrosseln $L_{n2}$ und $L_{n3}$ oder zusätzlich dazu vorgesehen werden kann.

Durch stufenweise Verringerung und Vergrösserung der Saugkreisinduktivität kann der Frequenzbereich verändert werden, in dem der Saugkreis dämpfend wirksam ist. Das Zu- und Abschalten von Zusatz-Filterdrosseln und Haupt-Filterdrosselabschnitten erfolgt durch Schaltsignale in Abhängigkeit vorgebbarer Frequenz-Grenzwerte.

Fig. 4 zeigt einen eingangsseitig an eine der drei Drehstrom-Phasenleitungen R, S, T angeschlossenen Saugkreis für eine n. harmonische Oberschwingung der ausgangsseitig geerdet ist und einen Filterkondensator $C_n$, eine Haupt-Filterdrossel $L_{n0}$ sowie zwei dazu in Reihe und untereinander parallel geschaltete Zusatz-Filterdrosseln $L_{na}$ und $L_{nb}$ mit ferromagnetischem Kern aufweist. In Reihe mit jeder dieser Zusatz-Filterdrosseln $L_{na}$ und $L_{nb}$ sind Dioden 12 und 13 geschaltet, die in der gleichen Richtung gepolt sind, so dass durch die Zusatz-Filterdrossel $L_{na}$ nur die positive Stromhalbschwingung und durch die Zusatz-Filterdrossel $L_{nb}$ nur die negative Stromhalbschwingung passieren kann. Die Zusatz-Filterdrosseln $L_{na}$ und $L_{nb}$ werden in der Nähe des Sättigungsbereiches der ferromagnetischen Kerne betrieben. Ihre Induktivitäten sind so bemessen, dass die ferromagnetischen Kerne für Frequenzen unterhalb der auszufilternden Frequenzen nicht gesättigt und oberhalb dieser Frequenzen gesättigt sind, was einer Verringerung der Induktivität entspricht. Damit ist eine kontinuierliche Veränderung der Resonanzfreqüenz des Saugkreises möglich. $R_n$ bezeichnet wieder den frequenzabhängigen ohmschen Widerstand der Filterdrosseln.

Die Erfindung ist selbstverständlich auf das in den Zeichnungen Dargestellte nicht beschränkt. So kann eine stufenweise Veränderung der Resonanzfrequenz der Saugkreise statt durch eine stufenweise Aenderung der Induktivität auch durch eine stufenweise Aenderung der Kapazität der Filterkondensatoren erfolgen. Dabei werden mehrere parallel geschaltete Kondensatoren verwendet, die über Wechselstromschalter stufenweise zu- und ab, schaltbar sind. Diese Massnahme kann auch zusätzlich zu den beschriebenen Massnahmen zur Veränderung der Induktivität der Filterdrosseln angewandt werden.

Mit den beschriebenen Massnahmen lassen sich frequenzvariable Filter insbesondere für Nennfrequenzen im Bereich von 4 Hz und 200 Hz herstellen, die für frequenzvariable Antriebe von besonderem Interesse sind. Die Filter sind mit einem an sich bekannten Symmetrieschutz und einem Ueberspannungsschutz versehen, die nicht Gegenstand der Erfindung und daher auch nicht dargestellt sind.

**Patentansprüche**

1. Wechselstrommaschinenantrieb, insbesondere Synchronmotorantrieb,
   a) mit einer mehrphasigen Wechselstrommaschine (M),
   b) die über Wechselstromleitungen (2)
   c) mit einem Frequenzumricher (1) verbunden ist, der einen Wechselstrom vorgebbarer, variabler Frewuenz erzeugt,
   dadurch gekennzeichnet,
   d) dass im Bypass zur Wechselstrommaschine (M) ein von der Umrichterausgansfrequenz abhängiges frequenzvariables Filter (6) zum Ausfiltern mindestens einer Oberschwingung des Wechselstromes geschaltet ist.

2. Wechselstrommaschinenantrieb nach Anspruch 1, dadurch gekennzeichnet,
   a) dass das Filter (6) für jede Phase des Wechselstroms (R, S, T) und für jede auszufilternde Oberschwingung einen Saugkreis besitzt, der auf die jeweilige auszufilternde Oberschwingung abgestimmt ist, und
   b) dass bei jedem Saugkreis ein Filterkondensator ($C_5$, $C_7$, $C_n$) in Reihe mit einer Filterdrossel ($L_5$, $L_7$, $L_{n0}$, $L_{n1}$, $L_{n2}$, $L_{n3}$, $L_{na}$, $L_{nb}$) geschaltet ist,
   c) wobei die Filterdrossel einen frequenzabhängigen ohmschen Widerstand ($R_5$, $R_7$, $R_n$) aufweist und
   d) jeder dieser Saugkreise eingangsseitig an eine Wechselstromleitung (2, R, S, T) angeschlossen ist.

3. Wechselstrommaschunenantrib nach Anspruch 2, dadurch gekennzeichnet, dass zwischen einer Phasenleitung (R) und jeder anderen Phasenleitung (S, T) ein Saugkreis für jede auszufilternde Oberschwingung geschaltet ist.

4. Wechselstrommaschinenantrieb nach Anspruch 2, dadurch gekennzeichnet,
   a) dass alle Saugkreise, die eingangsseitig an den gleichen Phasenleiter (R, S, T) angeschlossen sind, ausgangsseitig miteinander verbunden sind,
   b) dass die Ausgänge der Saugkreise, die an unterschiedliche Phasenleiter angeschlossen sind, über Wechselstromschalter (7, 8) miteinander verbunden und in Abhängigkeit von einem Schaltsignal kurzschliessbar sind,
   c) dass die Ausgänge der Saugkreise jedes Phasenleiters (R, S, T) mit einer jedem Phasenleiter zugeordneten Zuschaltdrossel ($L_x$) verbunden sind und
   d) dass diese Zuschaltdrosseln ($L_x$) andererseits miteinander verbunden sind.

5. Wechselstrommaschinenantrieb nach einem der Ansprüche 2 bis 4, dadurch gekennzeichnet,
   a) dass die Filterdrossel ($L_5$, $L_7$) eines Saugkreises aus einer Haupt-Filterdrossel ($L_{n0}$) in Reihe mit mindestens zwei weiteren Zusatz-Filterdrosseln ($L_{n1}$, $L_{n2}$, $L_{n3}$, $L_{na}$, $L_{nb}$) besteht,
   b) wobei die Züsatz-Filterdrosseln über mindestens ein Stromventil (9, 10; 12, 13) zueinander parallel geschaltet sind.

6. Wechselstrommaschinenantrieb nach Anspruch 5, dadurch gekennzeichnet, dass das Stromventil ein Wechselstromschalter (9, 10) mit antiparallel geschalteten Thyristoren ist.

7. Wechselstrommaschinenantrieb nach Anspruch 5, dadurch gekennzeichnet,
   a) dass mindestens zwei Zusatz-Filterdrosseln ($L_{na}$, $L_{nb}$) vorgesehen sind, die je einen ferromagnetischen Kern aufweisen,
   b) dass in Reihe mit jeder dieser beiden Zusatz-Filterdrosseln ein Stromventil (12, 13) geschaltet ist und
   c) dass diese Stromventile gleich gepolt sind, derart, dass durch die eine Zusatz-Filterdrossel (12) nur die postitive und durch die andere Zusatz-Filterdrossel (13) nur die negative Halbschwingung des Wechselstromes passieren kann.

8. Wechselstrommaschinenantrieb nach Anspruch 7, dadurch gekennzeichnet, dass die Zusatzdrosseln mit ferromagnetischem Kern in ihrer Induktivität so bemessen sind, dass sie für Frequenzen unterhalb der auszufilternden Frequenzen bzw. Oberschwingungen nicht gesättigt und oberhalb dieser Frequenzen gesättigt sind.

9. Wechselstrommaschinenantrieb nach einem der Ansprüche 2 bis 7, dadurch gekennzeichnet, dass die Filterdrossel ($L_{n0}$) mehrere Abgriffe aufweist, die mit einem Ausgang dieser Filterdrossel über einen Stufenschalter (11) verbunden sind.

## Claims

1. Alternating-current machine drive, particularly a synchronous motor drive,
a) comprising a multi-phase alternating-current machine (M),
b) which is connected via alternating-current lines (2),
c) to a frequency converter (1) which generates an alternating current of predeterminable, variable frequency, characterized in that
d) a variable-frequency filter (6), which is dependent on the converter output frequency, is connected to bypass the alternating-current machine (M) for filtering out at least one harmonic of the alternating kind.

2. Alternating-current machine drive according to Claim 1, characterized in that
a) the filter (6) has for each phase of the alternating current (R, 8, T) and for each harmonic to be filtered out one acceptance circuit which is tuned to the respective harmonic to be filtered out, and that
b) a filter capacitor ($C_5$, $C_7$, $C_n$) is connected in series with a filter choke ($L_5$, $L_7$, $L_{n0}$, $L_{n1}$, $L_{n2}$, $L_{n3}$, $L_{na}$, $L_{nb}$) in each acceptance circuit,
c) in which arrangement the filter choke has a frequency-dependent resistive impedance ($R_5$, $R_7$, $R_n$) and
d) the input of each of these acceptance circuits is connected to an alternating-current line (2, R, 8, T).

3. Alternating-current machine drive according to Claim 2, characterized in that an acceptance circuit for each harmonic to be filtered out is connected between one phase line (R) and each other phase line (S, T).

4. Alternating-current machine drive according to Claim 2, characterized in that
a) all acceptance circuits which are connected at the input side to the same phase conductor (R, S, T) are connected to each other at the output side,
b) that the outputs of the acceptance circuits which are connected to different phase conductors are connected to each o,ther via alternating-current switches (7, 8) and can be short-circuited as a function of a switching signal,
c) that the outputs of the acceptance circuits of each phase conductor (R, S, T) are connected to an addon choke ($L_x$) which is associated with each phase conductor, and
d) that, on the other hand, these add-on chokes ($L_x$) are connected to each other.

5. Alternating-current machine drive according to one of Claims 2 to 4, characterized in that
a) the filter choke ($L_5$, $L_7$) of an acceptance circuit consists of a main filter choke ($L_{n0}$) in series with at least two further additional filter chokes ($L_{n1}$, $L_{n2}$, $L_{n3}$, $L_{na}$, $L_{nb}$),
b) in which arrangement the additional filter chokes are connected in parallel with each other via at least one current valve (9, 10; 12, 13).

6. Alternating-current machine drive according to Claim 5, characterized in that the current valve is an alternating-current switch (9, 10 comprising anti-parallel connected thyristors.

7. Alternating-current machine drive according to Claim 5, characterized in that
a) at least two additional filter chokes ($L_{na}$, $L_{nb}$) are provided, each of which has a ferromagnetic core,
b) that a current valve (12, 13) is connected in series with each of these two additional filter chokes, and
c) that these current valves are connected with the same polarity, in such a manner that only the positive half-wave of the alternating current can pass through one additional filter choke (12) and only the negative half-wave of the alternating current can pass through the other additional filter choke (13).

8. Alternating-current machine drive according to Claim 7, characterized in that the inductance of the additional chokes with a ferromagnetic core is dimensioned in such a manner that they are not saturated at frequencies below the frequencies or harmonics to be filtered out and are saturated above these frequencies.

9. Alternating-current machine drive according to one of Claims 2 to 7, characterized in that the filter choke ($L_{n0}$) has several taps which are connected via a stepping switch (11) to an output of this filter choke.

## Revendications

1.- Dispositif de commande pour machine à courant alternatif, en particulier dispositif de commande pour moteur synchrone,
(a) comportant une machine à courant alternatif polyphasé (M),
(b) qui, par l'intermédiaire de conducteurs de courant alternatif (2),
(c) est connectée à un convertisseur statique de fréquence (1) qui produit un courant alternatif de fréquence variable pouvant être prédéfini, caractérisé en ce que
(d) un filtre à fréquence variable (6) dépendant de la fréquence de sortie du convertisseur statique et destiné à filtrer au moins une harmonique du courant alternatif est connecté en dérivation à la machine en courant alternatif (M).

2.- Dispositif de commande pour machine à courant alternatif suivant la revendication 1, caractérisé en ce que
(a) le filtre (6) comporte, pour chaque phase du courant alternatif (R, S, T) et pour chaque harmonique à filtrer, un circuit piège qui est accordé sur l'harmonique respective à filtrer, et
(b) pour chaque circuit piège, un condensateur de filtrage ($C_5$, $C_7$, $C_n$) est connecté en série avec une bobine de filtrage ($L_5$ $L_7$ $L_{n0}$ $L_{n1}$ $L_{n2}$ $L_{n3}$, $L_{na}$, $L_{nb}$)'
(c) la bobine de filtrage présentant une résistance ohmique dépendant de la fréquence ($R_5$, $R_7$, $R_n$), et
(d) chaque circuit piège étant connecté du côté d'entrée à un conducteur de courant alternatif (2, R, S, T).

3.- Dispositif de commande pour machine à courant alternatif suivant la revendication 2, caractérisé en ce qu'entre une ligne de phase (R) et chaque autre ligne de phase (S, T) est connecté un circuit piège pour chaque harmonique à filtrer.

4.- Dispositif de commande pour machine à courant alternatif suivant la revendication 2, caractérisé en ce que

(a) tous les circuits pièges, qui sont connectés du côté d'entrée aux mêmes lignes de phase (R, S, T) sont interconnectés du côté de sortie,

(b) les sorties des circuits pièges qui sont connectées à des lignes de phase différentes sont interconnectées par l'intermédiaire d'interrupteurs de courant alternatif (7, 8) et peuvent être courtcircuitées en fonction d'un signal de commutation,

(c) les sorties des circuits pièges de chaque ligne de phase (R, S, T) sont connectées à une bobine de mise en circuit $(L_x)$ associée à chaque ligne de phase, et

(d) ces bobines de mise en circuit $(L_x)$ sont connectées l'une à l'autre de l'autre côté.

5.- Dispositif de commande pour machine à courant alternatif suivant l'une quelconque des revendications 2 à 4, caractérisé en ce que

(a) la bobine de filtrage $(L_5, L_7)$ d'un circuit piège est formée d'une bobine de filtrage principale $(L_{n0})$ en série avec au moins deux autres bobines de filtrage auxiliaires $(L_{n1}, L_{n2}, L_{n3}, L_{na}, L_{nb})$,

(b) les bobines de filtrage auxiliaires étant connectées en parallèle l'une à l'autre par l'intermédiaire d'au moins une valve de courant (9, 10; 12, 13).

6.- Dispositif de commande pour machine à courant alternatif suivant la revendication 5, caractérisé en ce que la valve de courant est un interrupteur de courant continu (9, 10) comportant des thyristors connectés de manière antiparallèle.

7.- Dispositif de commande pour machine à courant alternatif suivant la revendication 5, caractérisé en ce que

(a) au moins deux bobines de filtrage auxiliaires $(L_{na}, L_{nb})$ sont prévues et comportent chacune un noyau ferromagnétique,

(b) une valve de courant (12, 13) est connectée en série avec chacune de ces deux bobines de filtrage auxiliaires, et

(c) ces valves de courant sont de même polarité, de sorte que la première bobine de filtrage auxiliaire (12) ne laisse passer que la demi-alternance positive et l'autre bobine de filtrage auxiliaire (13) que la demi-alternance négative du courant alternatif.

8.- Dispositif de commande pour machine à courant alternatif suivant la revendication 7, caractérisé en ce que les bobines auxiliaires à noyau ferromagnétique ont une inductance calibrée de telle sorte que pour des fréquences inférieures aux fréquences ou aux harmoniques à filtrer, elles ne soient pas saturées, mais qu'elles soient saturées au-dessus de ces fréquences.

9.- Dispositif de commande pour machine à courant alternatif suivant l'une quelconque des revendications 2 à 7, caractérisé en ce que la bobine de filtrage $(L_{n0})$ comporte plusieurs prises qui sont connectées à une sortie de cette bobine de filtrage par l'intermédiaire d'un commutateur à étages (11).

0 131 815

FIG.1

FIG.2

FIG.3

FIG.4